# FASCICULE DE BREVET EUROPEEN

(11) **EP 0 746 072 B1**
(45) Date de publication et mention de la délivrance du brevet: **14.07.1999**
(21) Numéro de dépôt: 96401107.6
(22) Date de dépôt: 22.05.1996
(51) Int. Cl.: H02B 1/50, H02B 1/38

(54) **Pupitre pour le logement notamment d'appareillages électriques**
Gehäuse zur Aufnahme insbesondere elektrischer Geräte
Cabinet for accommodating in particular electrical apparatus

(30) Priorité: 01.06.1995 FR 9506630
(43) Date de publication de la demande: 04.12.1996
(73) Titulaire: SCHNEIDER ELECTRIC SA, 92100 Boulogne Billancourt (FR)
(72) Inventeur: Deschamps, Jean-Christophe, 21700 Nuits Saint Georges (FR); Soteras Burgada, Marcelito, 08786 Capellades, Barcelone (ES); Schmit, Francis, 21121 Fontaine les Dijon (FR); Xaus Regordosa, Lluis, 08700 Igualada, Barcelone (ES)
(74) Mandataire: Saint Martin, René

(56) Documents cités:
- EP-A- 0 522 252
- DE-A- 1 465 529
- DE-A- 1 590 367
- DE-A- 2 160 810
- DE-U- 8 109 486
- FR-A- 2 390 072
- US-A- 5 189 257

## Description

La présente invention se rapporte à un pupitre pour le logement notamment d'appareillages électriques et comportant un couvercle rabattable pour le support d'éléments de commande et/ou de dialogue. Sous sa forme la plus générale, un tel pupitre comprend d'une part une embase comportant des ouvertures inférieure et supérieure situées respectivement sur les faces avant et supérieure de l'embase et communiquant librement entre elles, et d'autre part, associés à l'embase de façon étanche, une porte destinée à fermer l'ouverture inférieure et un couvercle rabattable sur l'ouverture supérieure et muni d'un rabat destiné à obturer une partie de l'ouverture inférieures.

Un tel pupitre est en particulier utilisé dans des installations électriques et comprend un châssis intérieur auquel sont fixés des appareillages électriques tels que des contacteurs, des disjoncteurs, des relais thermiques et les organes associés de support de distribution ou de connexion. Les éléments de commande et de dialogue, par exemple une unité de dialogue rendue solidaire du couvercle, sont reliés aux appareillages électriques du côté de la face inteme du couvercle et sont accessibles pour le personnel d'utilisation de la face externe.

Dans le texte qui suit, on désigne par pupitre toute enveloppe du genre pupitre, console ou armoire-console.

Ce type de pupitre présente, en général, sur la face avant de l'embase et du côté de l'ouverture supérieure, un bandeau supérieur solidaire et transversal aux parois latérales verticales de l'embase. Le bandeau contribue à la rigidité de l'embase lorsque le couvercle supportant l'unité de dialogue est en position fermée et repose donc sur les bords supérieurs des parois latérales et du bandeau. Le bandeau est aussi utile au verrouillage de la porte et du couvercle; en effet, des dispositifs de fermeture montés sur la porte et le couvercle coopèrent avec le bandeau de manière à les verrouiller.

Cependant, lorsque la porte ou le couvercle du pupitre est ouvert, la présence de ce bandeau supérieur rend difficile l'accès au châssis interne supportant les appareillages électriques. Il n'est pas commode pour le personnel d'installation ou de maintenance d'accéder aisément aux appareillages afin de pouvoir exécuter le raccordement et le câblage de ceux-ci avec l'unité de dialogue ou de permettre leur maintenance plus facilement.

On connait d'après le document DE-A-2 160 810 un coffret de distribution électrique conforme au préambule de la revendication 1. Les ouvertures inférieure et supérieure communiquent librement sans présence d'un bandeau supérieur, mais la rigidité de l'enveloppe est réalisée par la présence de profilés inférieurs et supérieurs et d'un cadre transversal aux profilés, auxquels est fixé un manteau.

La présente invention a donc pour objet une configuration du pupitre qui conduit après ouverture de la porte et/ou du couvercle à un accès facile vers l'intérieur, tout en gardant une bonne rigidité à l'embase sans moyens de renfort rapportés tels que des profilés.

Selon l'invention, le pupitre est caractérisé en ce que l'embase comprend des gouttières à concavité orientée vers l'extérieur de l'embase qui participent à la rigidité de l'embase et sont destinées à accueillir les bords du couvercle et de la porte, et le rabat du couvercle est muni de moyens d'imbrication étanche et de verrouillage du couvercle et de la porte, ces moyens étant constitués par la forme profilée adaptée de la partie inférieure du rabat.

Dans la suite du texte, le terme gouttière définit toute gouttière de forme en U ou ouverte sur l'un de ses côtés longitudinaux.

Selon une caractéristique, l'embase comprend des gouttières latérales qui présentent une concavité orientée vers l'extérieur et qui s'étendent de manière jointive aux rebords supérieurs et aux rebords verticaux de façade des parois latérales verticales de l'embase, et sont destinées à recevoir des bords pliés latéraux du couvercle et des bords pliés verticaux de la porte.

Selon une autre caractéristique, l'embase comprend à l'arrière de la face supérieure une gouttière longitudinale à concavité orientée vers l'extérieur et destinée à recevoir un bord plié longitudinal du couvercle. La gouttière longitudinale communique librement avec les gouttières latérales, et présente un fond se situant dans le même plan que le fond des gouttières latérales.

Selon une autre caractéristique, les moyens d'imbrication et de verrouillage de la porte et du couvercle consistent avantageusement en une gouttière horizontale à concavité orientée vers l'extérieur et dont le fond est en retrait par rapport au plan de l'âme du rabat, cette gouttière étant destinée à loger un bord plié supérieur de la porte et la face externe de son fond étant destinée à servir de surface d'appui à un dispositif de verrouillage du couvercle et de la porte.

Par ailleurs, la porte comprend au moins deux dispositifs de verrouillage agissant à l'arrière d'une part d'un bandeau inférieur solidaire de la paroi de fond horizontale de l'embase et d'autre part du rabat du couvercle pour verrouiller le pupitre.

La description faite ci-après en regard des dessins fera ressortir les caractéristiques et les avantages de l'invention.

Aux dessins annexés:
- la figure 1 est une vue en perspective d'un pupitre selon l'invention avec la porte et le couvercle ouverts;
- la figure 2 est la partie supérieure d'une vue en coupe du pupitre fermé selon un plan Q ;
- la figure 3 est une vue en coupe du pupitre fermé sans les dispositifs de verrouillage selon un plan P;
- la figure 4 est la partie inférieure de la vue en coupe du pupitre fermé selon le plan Q;
- les figures 5 et 6 sont des variantes de la figure 2.

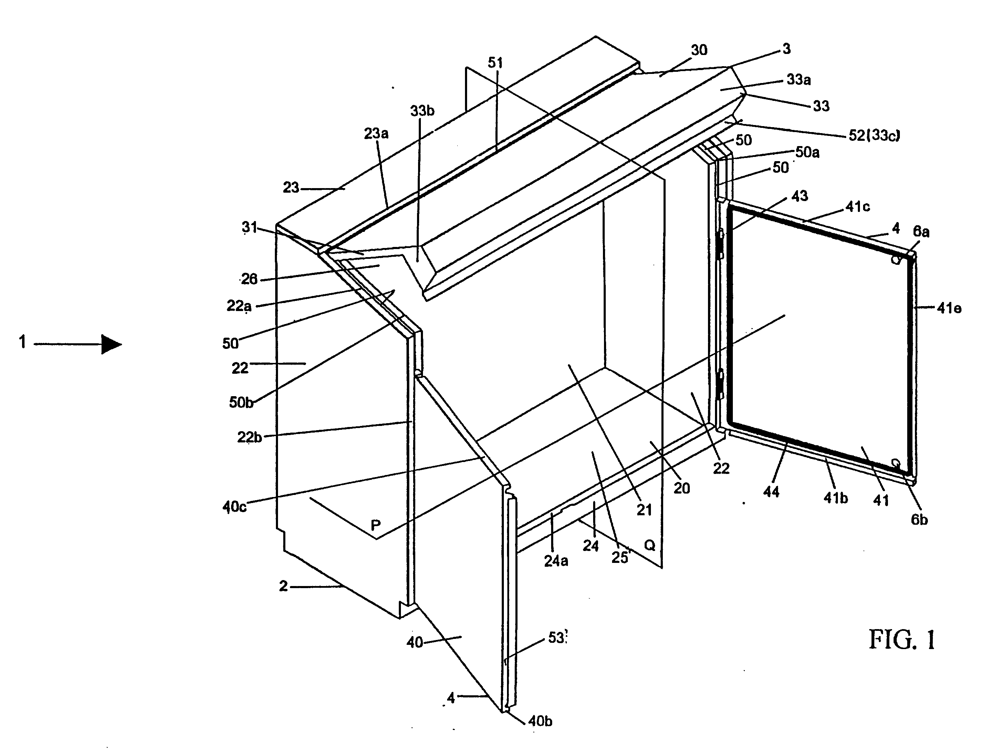

L'invention se rapporte à un pupitre, par exemple métallique, repéré 1 sur la figure 1, destiné à recevoir des appareillages électriques et une unité de commande de ces appareillages, qui ne sont présentement pas représentés. Le pupitre comprend une embase 2, ainsi qu'un couvercle rabattable 3 et une porte 4 associés de façon étanche à l'embase.

L'embase 2 comprend un fond horizontal 20, une paroi arrière verticale 21, des parois latérales verticales 22, une partie supérieure horizontale 23 sur sa face supérieure et un bandeau inférieur de façade 24 sur sa face avant.

Le bandeau inférieur de façade 24 est solidaire du fond 20 et des parois latérales 22, respectivement par son bord inférieur et ses bords latéraux. Il présente le long de son bord supérieur un rebord 24a en saillie vers l'extérieur de l'embase. De plus, dans son prolongement et vers le haut de l'embase est située une ouverture 25, dite ouverture inférieure.

La partie supérieure 23 est perpendiculaire à la paroi arrière 21 et solidaire de celle-ci et des parois latérales 22, elle peut être apte à supporter un dosseret destiné à recevoir des organes de commande et de signalisation supplémentaires. Dans le prolongement de cette partie supérieure 23 et vers l'avant de l'embase est située une ouverture 26, dite ouverture supérieure, qui communique librement avec l'ouverture inférieure 25.

Les parois latérales 22 comportent des rebords supérieurs 22a et des rebords verticaux de façade 22b. Les rebords supérieurs 22a présentent une partie inclinée vers le bas de l'embase.

L'embase 2 comprend aussi des gouttières qui participent à sa rigidité. Ces gouttières présentent une concavité orientée vers l'extérieur de l'embase et sont disposées au niveau des parois latérales 22 et de la partie supérieure 23.

Les parois latérales 22 présentent chacune une gouttière latérale 50 s'étendant sans discontinuité et de manière jointive à la partie inclinée des rebords supérieurs 22a et des rebords verticaux 22b; le fond 50a de la gouttière latérale est parallèle aux rebords 22a et 22b et est en retrait vers l'intérieur de l'embase.

Le bord longitudinal libre 23a de la partie supérieure 23 présente, du côté de l'ouverture supérieure 26, une gouttière longitudinale 51 dont le fond 51a communique librement à ses extrémités avec les gouttières latérales 50 et se situe dans le plan d'inclinaison du fond 50a des parties inclinées des gouttières 50.

Le couvercle rabattable 3 est apte à fermer l'ouverture supérieure 26 de l'embase. Il comprend un panneau 30 qui présente des plis intérieurs 31 sur ses bords latéraux destinés à se loger dans la partie inclinée des gouttières latérales 50, un pli intérieur 32 sur un bord longitudinal destiné à s'engager dans la gouttière longitudinale 51 et un rabat 33 sur l'autre bord longitudinal destiné à obturer une partie de l'ouverture inférieure 25.

Le rabat 33 comprend une âme 33a qui présente latéralement des bords pliés intérieurs 33b et à son extrémité libre longitudinale des moyens d'imbrication étanche et de verrouillage 33c du couvercle et de la porte. Les moyens d'imbrication et de verrouillage 33c consistent en une gouttière 52 présentant une concavité orientée vers l'extérieur et dont le fond 52a se trouve parallèle et en retrait par rapport au plan de l'âme 33a.

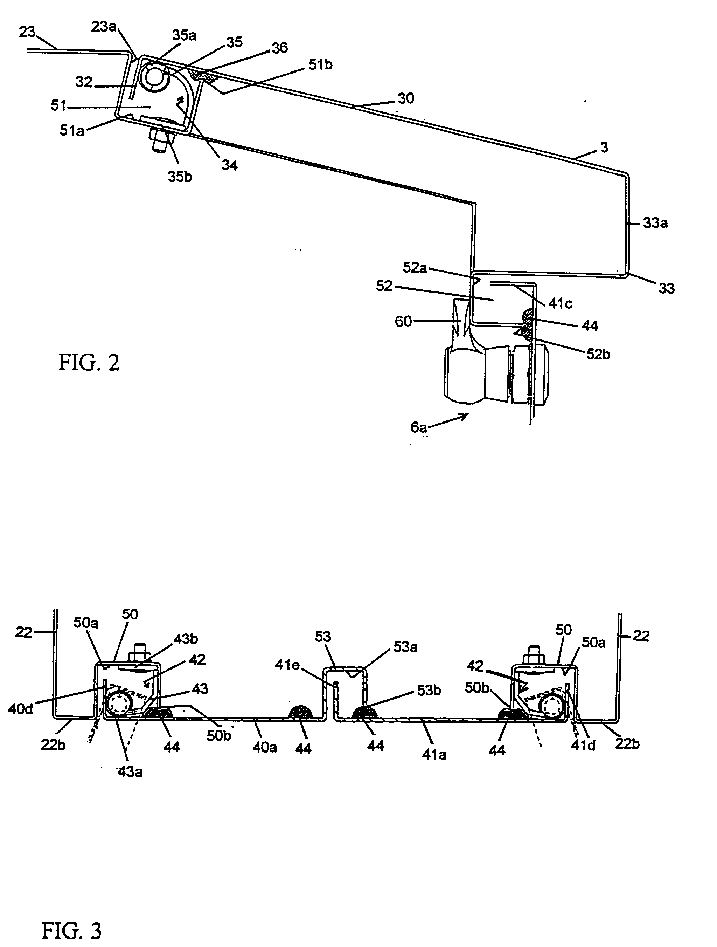

Lorsque le couvercle est en position fermée, comme illustré à la figure 2, le panneau 30 est incliné suivant le plan d'inclinaison des rebords supérieurs 22a de l'embase et se trouve dans la continuité du plan de la partie supérieure 23; l'âme 33a du rabat se situe en saillie par rapport au plan de façade de l'embase et les plis intérieurs latéraux 33b du rabat sont logés dans la partie verticale des gouttières latérales 50.

Par ailleurs, le pli longitudinal 32 est destiné à recevoir les moyens d'articulation 34 du couvercle par rapport à l'embase. Les moyens d'articulation 34 consistent par exemple en deux charnières 35 disposées aux extrémités du pli 32. Une charnière 35, illustrée à la figure 2, présente d'une part une partie 35a solidaire des faces internes du panneau 30 et du pli longitudinal 32, et d'autre part une partie 35b fixée par une vis et un écrou au fond 51a de la gouttière 51.

Enfin, le couvercle 3 comporte un joint 36 disposé sur la face interne du panneau 30 en périphérie des bords latéraux et du bord longitudinal portant les charnières. En position de fermeture du couvercle, le joint 36 coopère avec les tranches saillantes 50b et 51b des gouttières 50 et 51 de manière à assurer une étanchéité entre le couvercle et l'embase. Ce joint est constitué en caoutchouc souple ou en toute autre matière appropriée.

La porte 4 est destinée à fermer l'ouverture inférieure 25 de l'embase. Elle est formée de deux battants 40 et 41.

Le premier battant 40 comprend un panneau 40a qui présente intérieurement, d'une part le long de ses deux bords horizontaux un pli inférieur 40b et un pli supérieur 40c, et d'autre part, le long d'un bord vertical correspondant au côté d'articulation du battant un pli 40d, et le long du bord vertical opposé une gouttière verticale 53. La gouttière 53 présente une concavité orientée vers l'extérieur du battant et dont le fond 53a se trouve parallèle et en retrait par rapport au plan du panneau 40a (figure 3).

Le second battant 41 comprend un panneau 41a qui présente sur son contour des bords pliés intérieurs horizontaux inférieur 41b et supérieur 41c et des bords pliés intérieurs verticaux 41d et 41e.

Les plis verticaux 40d et 41d des deux battants de porte sont logés dans les parties verticales des gouttières latérales 50. Ils présentent des moyens d'articulation 42 de manière à articuler les battants de la porte par rapport à l'embase. Les moyens d'articulation 42 consistent en des charnières 43, comme illustrées à la figure 3, ayant d'une part une partie 43a solidaire de la face interne des panneaux 40a, 41a et des bords pliés verticaux 40d, 41d, et d'autre part une partie 43b fixée par une vis et un écrou sur le fond 50a de la partie verticale des gouttières 50.

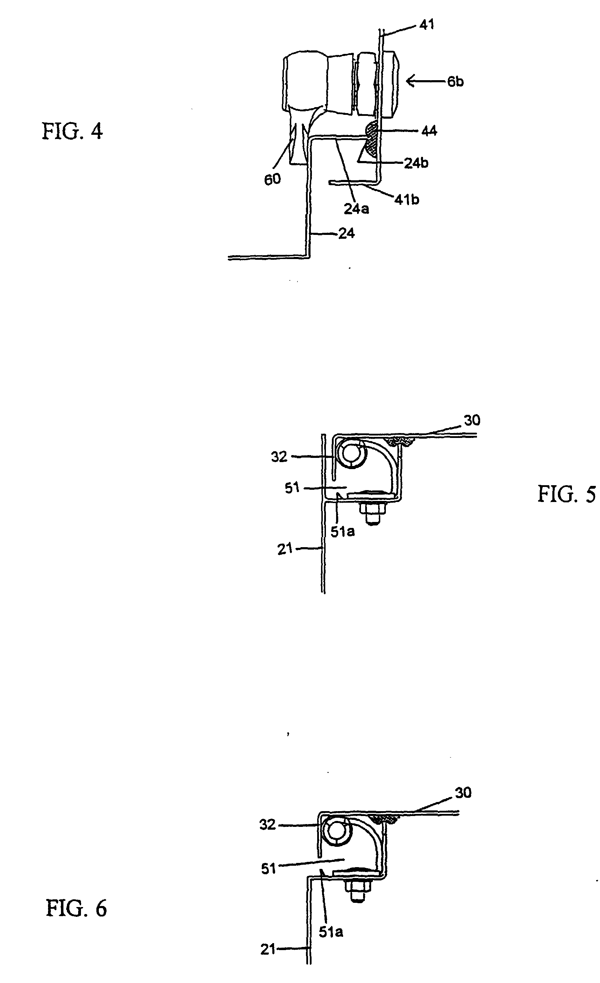

Lorsque le couvercle est abaissé sur l'ouverture supérieure 26 et que les battants sont fermés sur l'ouverture inférieure 25, le bord plié vertical 41e du second battant est logé dans la gouttière verticale 53 du premier battant (figure 3), les bords pliés supérieurs 41c et 40c des battants sont engagés dans la gouttière horizontale 52 du couvercle (figure 2) et les bords pliés inférieurs 41b et 40b des battants coiffent le rebord 24a du bandeau inférieur 24 (figure 4).

L'étanchéité entre les battants et l'embase ainsi qu'entre le couvercle et les battants est assurée par des joints 44 qui sont disposés sur la face interne et à la périphérie du contour des panneaux 40a et 41a. En position fermée de la porte, les joints 44 sont écrasés contre les tranches saillantes 50b, 52b, 53b et 24b, respectivement, des parties verticales des gouttières latérales 50, de la gouttière horizontale 52, de la gouttière verticale 53 du premier battant, et du rebord 24a du bandeau inférieur 24 (figures 2, 3 et 4). En variante, il est possible d'établir l'étanchéité entre le couvercle et la porte par un joint disposé dans le fond 52a de la gouttière 52 et destiné à s'appliquer sur la tranche des bords pliés supérieurs 40c et 41c de la porte.

Le verrouillage du couvercle 3 et de la porte 4 est réalisé grâce à au moins deux dispositifs de verrouillage 6a, 6b de type connu implantés dans les parties supérieure et respectivement inférieure du second battant 41 de la porte (figures 2 et 4).

Les dispositifs de verrouillage comprennent respectivement un doigt de verrouillage 60 apte à venir en appui d'une part contre la face interne du bandeau inférieur 24 afin de verrouiller la porte 4 (figure 4), et d'autre part contre la face externe du fond 52a de la gouttière horizontale 52 du couvercle afin de verrouiller le couvercle 3 et de façon complémentaire la porte (figure 2).

La suppression d'un bandeau supérieur permet de réduire le nombre de dispositifs de verrouillage et notamment de les supprimer au niveau du couvercle.

Pour la fermeture du pupitre, il suffit de rabattre en premier le couvercle 3 sur l'ouverture supérieure 26, les plis intérieurs latéraux 31 s'engageant dans la partie inclinée des gouttières latérales 50. Le premier battant 40 de la porte est ensuite amené contre l'embase de manière à obstruer une partie de l'ouverture inférieure 25, puis le second battant 41 est à son tour articulé pour fermer totalement l'ouverture 25, le pli vertical 41e opposé à celui portant les moyens d'articulation étant engagé dans la gouttière 53 du premier battant 40. Les bords pliés horizontaux supérieurs 40c, 41c de la porte sont logés dans la gouttière horizontale 52 du couvercle. Enfin, on manoeuvre les dispositifs de verrouillage 6b et 6a de manière à amener les doigts de verrouillage 60 derrière le bandeau inférieur 24 de l'embase et derrière le rabat 33 du couvercle; le couvercle et la porte sont ainsi verrouillés et les joints 36 sont pressés contre les tranches saillantes des gouttières 50, 51, 52, 53 et du rebord 24a garantissant l'étanchéité du pupitre.

Pour procéder à l'ouverture du pupitre, il suffit de déverrouiller les dispositifs 6a et 6b situés sur la porte, d'ouvrir d'abord le second battant 41 puis le premier battant 40 et enfin de soulever le couvercle 4. Cet ordre d'ouverture contribue à la sécurité du personnel de maintenance. En effet, en plaçant un unique capteur sur la porte, l'ouverture de la porte déclenche alors l'arrêt de l'alimentation des appareillages électriques et par suite de l'unité de commande; l'accès aux branchements de l'unité de commande peut ainsi se faire en toute sécurité.

Dans une variante de l'invention, la porte 4 peut être constituée d'un seul battant présentant des plis horizontaux supérieur et inférieur s'engageant dans la gouttière horizontale 52 et coiffant le rebord 24a du bandeau inférieur, et des plis verticaux se logeant dans les parties verticales des gouttières 50.

Dans une autre variante, le pupitre peut ne pas être destiné à porter sur sa face supérieure un dosseret, il est alors possible de supprimer la partie supérieure 23, le pli longitudinal 32 du couvercle s'engageant dans la gouttière longitudinale 51 disposée sur la face supérieure et attenante à la paroi arrière 21 de l'embase (figures 5 et 6).

## Revendications

1. Pupitre, notamment pour le logement d'appareillages électriques et pour le support d'éléments de commande et/ou de dialogue, comprenant d'une part une embase (2) comportant une ouverture inférieure (25) sur la face avant et une ouverture supérieure (26) sur la face supérieure, et d'autre part, associés à l'embase de façon étanche, une porte (4) destinée à fermer l'ouverture inférieure (25) et un couvercle (3) rabattable sur l'ouverture supérieure (26) et muni d'un rabat (33) destiné à obturer une partie de l'ouverture inférieure (25), les ouvertures inférieure et supérieure (25, 26) communiquant librement entre elles dans la position ouverte du couvercle et de la porte, caractérisé en ce que l'embase comprend des gouttières (50, 51) à concavité orientée vers l'extérieur de l'embase qui participent à la rigidité de l'embase et sont destinée à accueillir les bords du couvercle (3) et de la porte (4), et le rabat (33) du couvercle (3) est muni de moyens d'imbrication étanche et de verrouillage (33c) du couvercle et de la porte, ces moyens étant constitués par la forme profilée adaptée de la partie inférieure du rabat.

2. Pupitre selon la revendication 1, caractérisé en ce que l'embase comprend des gouttières latérales (50) qui présentent une concavité orientée vers l'extérieur et qui s'étendent de façon jointive aux rebords supérieurs (22a) et aux rebords verticaux de façade (22b) des parois latérales verticales (22) de l'embase, et sont destinées à recevoir des bords pliés latéraux (31) du couvercle (3) et respectivement des bords pliés verticaux (40d, 41d) de la porte (4).

3. Pupitre selon la revendication 1 ou 2, caractérisé en ce que les moyens d'imbrication et de verrouillage (33c) consistent en une gouttière horizontale (52) prévue longitudinalement au rabat (33), à concavité orientée vers l'extérieur et dont le fond (52a) est parallèle et en retrait par rapport au plan de l'âme du rabat, la gouttière horizontale (52) étant destinée à loger un bord plié supérieur (40c, 41c) de la porte (4) et la face externe du fond (52a) étant destinée à servir de surface d'appui à un dispositif de verrouillage (6a) du couvercle et de la porte.

4. Pupitre selon l'une quelconque des revendications précédentes, caractérisé en ce que l'embase (2) comprend à l'amère de la face supérieure une gouttière longitudinale (51) à concavité orientée vers l'extérieur et destinée à recevoir un bord plié longitudinal (32) du couvercle (3), la gouttière longitudinale (51) communiquant librement avec les gouttières latérales (50) et présentant un fond (51a) se situant dans le même plan que le fond (50a) des gouttières latérales (50).

5. Pupitre selon l'une quelconque des revendications précédentes, caractérisé en ce que l'embase (2) comprend un bandeau inférieur (24) solidaire de la paroi de fond horizontale (20) et des parois latérales verticales (22) de l'embase et présentant un rebord (24a) en saillie vers l'extérieur destiné à être coiffé par un bord plié inférieur (40b, 41b) de la porte (4).

6. Pupitre selon l'une quelconque des revendications précédentes, caractérisé en ce que le couvercle (3) et la porte(4) présentent des moyens d'articulation (34, 42) fixés dans la gouttière longitudinale (51) et respectivement dans la partie verticale des gouttières latérales (50).

7. Pupitre selon l'une quelconque des revendications précédentes, caractérisé en ce que la porte (4) comprend un premier battant (40) et un deuxième battant (41), le premier battant (40) présentant une gouttière verticale (53) destinée à loger un bord plié vertical (41e) du deuxième battant (41).

8. Pupitre selon l'une quelconque des revendications 3 à 7, caractérisé en ce que la porte (4) comprend au moins deux dispositifs de verrouillage (6a, 6b) agissant sur l'arrière d'un bandeau inférieur (24) de l'embase et sur l'arrière de la gouttière (52) du rabat (33) du couvercle rabattable.

9. Pupitre selon l'une quelconque des revendications 3 à 8, caractérisé en ce que le couvercle (3) et la porte (4) coopèrent de façon jointive et étanche grâce à un joint (44) au niveau de la gouttière (52) du couvercle et de la partie supérieure de la porte.

10. Pupitre selon l'une quelconque des revendications précédentes, caractérisé en ce que l'embase (2) comprend sur la face supérieure une partie supérieure horizontale (23) perpendiculaire à la paroi arrière (21) et solidaire de celle-ci et des parois latérales (22), la partie horizontale (23) étant apte à supporter un dosseret.

## Patentansprüche

1. Pult, insbesondere für die Aufnahme von elektrischen Geräten und zur Anbringung von Steuerund/oder Dialogelementen, mit einerseits einem Sockel (2) mit einer unteren Öffnung (25) an der vorderen Fläche und einer oberen Öffnung (26) an der oberen Fläche, und andererseits, dicht mit dem Sockel verbunden, einer Tür (4) zum Verschliessen der unteren Öffnung (25) und einem Klappdeckel (3) auf der oberen Öffnung (26), der mit einer Klappe (33) zum Verschliessen eines Teiles der unteren Öffnung (25) ausgerüstet ist, wobei die untere und die obere Öffnung (25, 26) in geöffneter Position des Deckels und der Tür in freier Verbindung miteinander stehen, dadurch gekennzeichnet, dass der Sockel Rinnen (50, 51) mit aus dem Sockel gerichteter Konkavität umfasst, die zur Steifigkeit des Sockels beitragen und dazu dienen, die Kanten des Deckels (3) und der Tür (4) aufzunehmen, und dass die Klappe (33) des Deckels (3) mit dichten Verschachtelungs- und Verriegelungsmitteln (33c) des Deckels und der Tür augerüstet ist, wobei diese Mittel aus der profilierten, dem unteren Teil des Klappe angepassten Form bestehen.

2. Pult nach Anspruch 1, dadurch gekennzeichnet, dass der Sockel seitliche Rinnen (50) umfasst, die eine nach aussen gerichtete Konkavität aufweisen und sich aneinanderstossend an den oberen Rändern (22a) und den vertikalen Fassadenrändern (22b) der vertikalen Seitenwände (22) des Sockels erstrecken und dazu bestimmt sind, die seitlichen umgelegten Kanten (31) des Deckels (3) und jeweils die vertikalen umgelegten Kanten (40d, 41d) der Tür (4) aufzunehmen.

3. Pult nach Anspruch 1 oder 2, dadurch gekennzeichnet, dass die Verschachtelungs- und Verriegelungsmittel (33c) aus einer horizontalen, in Längsrichtung zur Klappe (33) verlaufenden Rinne (52) mit nach aussen gerichteter Konkavität bestehen, und deren Boden (52a) in Bezug auf die Ebene der Seele der Klappe parallel und zurückgezogen ist, wobei die horizontale Rinne (52) dazu bestimmt ist, eine umgelegte obere Kante (40c, 41d) der Tür (4) aufzunehmen, und wobei die Aussenfläche des Bodens (52a) als Stützfläche für eine Verriegelungsvorrichtung (6a) des Deckels und der Tür dienen soll.

4. Pult nach einem der vorstehend genannten Ansprüche, dadurch gekennzeichnet, dass der Sockel (2) an der Rückseite der oberen Fläche eine Längsrinne (51) mit nach aussen gerichteter Konkavität zur Aufnahme einer umgelegten Längskante (32) des Deckels (3) umfasst, wobei die Längsrinne (51) in freier Verbindung mit den Seitenrinnen (50) steht und einen Boden (51a) aufweist, der sich auf der gleichen Ebene wie der Boden (50a) der Seitenrinnen (50) befindet.

5. Pult nach einem der vorstehend genannten Ansprüche, dadurch gekennzeichnet, dass der Sockel (2) einen unteren, mit der horizontalen Bodenwand (20) und den vertikalen Seitenwänden (22) des Sockels verbundenen Streifen (24) umfasst, der einen auskragenden Rand (24a) aufweist und von einer unteren umgelegten Kante (40b, 41b) der Tür (4) überdeckt werden soll.

6. Pult nach einem der vorstehend genannten Ansprüche, dadurch gekennzeichnet, dass der Deckel (3) und die Tür (4) in der Längsrinne (51) und jeweils im vertikalen Teil der Seitenrinnen (50) befestigte Gelenkmittel (34, 42) aufweisen.

7. Pult nach einem der vorstehend genannten Ansprüche, dadurch gekennzeichnet, dass die Tür (4) einen ersten Flügel (40) und einen zweiten Flügel (41) umfasst, wobei der erste Flügel (40) eine vertikale Rinne (53) zur Aufnahme einer vertikalen umgelegten Kante (41e) des zweiten Flügels (41) aufweist.

8. Pult nach einem der Ansprüche 3 bis 7, dadurch gekennzeichnet, dass die Tür (4) mindestens zwei Verriegelungsvorrichtungen (6a, 6b) umfasst, die auf die Rückseite eines unteren Streifens (24) des Sockels und die Rückseite der Rinne (52) der Klappe (33) des Klappdeckels wirken.

9. Pult nach einem der Ansprüche 3 bis 8, dadurch gekennzeichnet, dass der Deckel (3) und die Tür (4) dank einer Dichtung (44) an der Rinne (52) des Deckels und dem oberen Teil der Tür aneinanderliegend und dicht zusammenwirken.

10. Pult nach einem der vorstehend genannten Ansprüche, dadurch gekennzeichnet, dass der Sockel (2) an der oberen Fläche einen oberen horizontalen Teil (23) umfasst, der lotrecht zur hinteren Wand (21) verläuft und mit dieser und Seitenwänden (22) verbunden ist, wobei der horizontale Teil (23) einen Rücken tragen kann.

## Claims

1. Console, particularly for housing electrical equipment and supporting control and/or dialog components comprising a base (2), having a lower opening (25) in the front panel and an upper opening (26) on the upper surface, and, fastened to the base to form a leaktight seal, a door (4) designed to close the lower opening (25) and a hinged lid (3) that can be closed over the lower opening (26) and fitted with a flap (33) designed to close part of the lower opening (25), the upper and lower openings (25, 26) connecting freely with one another in the open position of the lid and the door, characterized by the fact that the base comprises gutters (50, 51) whose concave shape faces outwards from the base and which add to the rigidity of the base, said gutters also being designed to receive the edges of lid (3) and the door (4), the flap (33) of the lid (3) being fitted with means (33c) for leaktight overlapping and locking the lid and the door, said means consisting of the rolled section shape matching the lower section of the flap.

2. Console of claim 1, characterized by the fact that the base comprises lateral gutters (50) whose concave shape faces outwards and which form a seal along the upper edges (22a) and vertical edges of the facade (22b) of the lateral vertical surfaces (22) of the base and are designed to accept respectively the folded lateral edges (31) of the lid (3) and the folded vertical edges (40d, 41d) of the door (4).

3. Console of either claim 1 or 2 characterized by the fact that the leaktight overlapping and locking means (33c) consist of a horizontal gutter (52) running longitudinally along the flap (33) whose concave shape faces outwards and whose bottom (52a) is parallel to and set back from the plane of the core of the flap, the horizontal gutter (52) being designed to accept an upper folded edge (40c, 41c) of the door (4) and the outer surface of the bottom (52a) being designed to act as the bearing surface of a locking device (6a) for the lid and the door.

4. Console of any of the preceding claims, characterized by the fact that the base (2) comprises at the rear of its upper surface a longitudinal gutter (51) whose concave shape faces outwards and which is designed to accept a longitudinal folded edge (32) of lid (3), the longitudinal gutter (51) connecting freely with the lateral gutters (50) and whose bottom (51a) lies in the same plane as the bottom (50a) of the lateral gutters (50).

5. Console of any of the foregoing claims, characterized by the fact that the base (2) comprises a lower fascia (24) constructed as part of the lower horizontal surface (20) and the lateral vertical surfaces (22) of the base and having a flap (24a) that projects outwards and is designed to be covered by a lower folded edge (40b, 41b) of the door (4).

6. Console of any of the foregoing claims, characterized by the fact that the lid (3) and the door (4) have hinge means (34, 42) respectively mounted in the longitudinal gutter (51) and the vertical section of the lateral gutters (50).

7. Console of any of the foregoing claims, characterized by the fact that the door (4) comprises a first leaf (40) and a second leaf (41), said first leaf (40) having a vertical gutter (53) designed to accept a folded vertical edge (41e) of the second leaf (41).

8. Console of any of claims 3 to 7 characterized by the fact that the door (4) comprises at least two locking devices (6a, 6b) acting on the rear of a lower fascia (24) of the base and on the rear of the gutter (52) of the flap (33) of the hinged lid.

9. Console of any of claims 3 to 8 characterized by the fact that the lid (3) and the door (4) form a leaktight seal due to the presence of a seal (44) in the gutter (52) of the lid and the upper section of the door.

10. Console of any of the preceding claims characterized by the fact that the upper surface of the base (2) comprises a horizontal upper section (23) that is perpendicular to the rear surface (21) and built as part of this surface and the lateral surfaces (22), said horizontal section (23) being designed to support a backplate.
